(19) Europäisches Patentamt

European Patent Office

Office européen des brevets

(11) EP 1 917 090 B1

(12) **EUROPEAN PATENT SPECIFICATION**

(45) Date of publication and mention
of the grant of the patent:
**21.08.2013 Bulletin 2013/34**

(21) Application number: **06788977.4**

(22) Date of filing: **27.07.2006**

(51) Int Cl.:
***B01D 39/16*** (2006.01)   ***B01D 39/20*** (2006.01)

(86) International application number:
**PCT/US2006/029724**

(87) International publication number:
**WO 2007/016481 (08.02.2007 Gazette 2007/06)**

(54) **ANTIMICROBIAL MULTICOMPONENT FILTRATION MEDIUM**

ANTIMIKROBIELLES MEHRKOMPONENTENFILTRATIONSMEDIUM

DISPOSITIF DE FILTRATION ANTIMICROBIEN MULTICOMPOSÉ

(84) Designated Contracting States:
**BE DE ES FR GB**

(30) Priority: **29.07.2005 US 704062 P**

(43) Date of publication of application:
**07.05.2008 Bulletin 2008/19**

(73) Proprietor: **Fiberweb, Inc.**
**Old Hickory, TN 37138 (US)**

(72) Inventors:
• **BAKER, John, Frank**
**Old Hickory, TN 37138 (US)**
• **REEVES, John, M.**
**Old Hickory, TN 37138 (US)**
• **ANGELINI, Peter, J.**
**Old Hickory, TN 37138 (US)**

(74) Representative: **Noel, Chantal Odile et al**
**Cabinet Orès**
**36, rue de St Pétersbourg**
**75008 Paris (FR)**

(56) References cited:
**WO-A-02/13942       WO-A1-2006/013378**
**JP-A- 7 054 208      US-A1- 2004 152 387**
**US-A1- 2004 214 495**

EP 1 917 090 B1

**Description**

BACKGROUND OF THE INVENTION

The present invention relates to filtration media, and more particularly to liquid filtration media suitable for use in pool and spa filters.

Pools and spas typically include a filtration system through which the water is circulated to remove dirt, debris and other foreign matter. Many of the filtration systems utilize a replaceable filter cartridge of a generally cylindrical form containing a filter element of a pleated construction. The filter element is typically made of a pleated polyester nonwoven fabric material. One such nonwoven fabric material that has been in widespread use for a number of years is sold by BBA Fiberweb under the trademark Reemay® and comprises a spunbond nonwoven fabric formed of polyester filaments bonded together to form a coherent strong pleatable nonwoven fabric filtration medium.

In order to inhibit the growth of microorganisms on the surface of the pool and spa filter element, antimicrobial agents can be incorporated in the nonwoven filtration media. Conventional methods of adding an antimicrobial agent to filtration media include incorporating antimicrobial particles, such as silver chloride, into the fiber structure during melt extrusion of the fibers or subjecting the fibers or the filtration media to a dyeing operation to achieve penetration of the antimicrobial agent into the fiber. Dyeing the fibers is not a viable option for those nonwoven fabric manufacturing processes where fiber formation and nonwoven fabric formation occur in-line, such as the spunbond or meltblown processes. Dyeing the nonwoven fabric after its formation to incorporate the antimicrobial agent is slow and requires additional processing operations that undesirably add to the expense of producing the filtration media. While some antimicrobial agents can be incorporated into the fibers of a nonwoven fabric by melt extrusion during fabric formation, many of the available antimicrobial agents cannot be used in this manner since they are thermally degraded at the extrusion temperatures of the fiber-forming polymers. A further limitation of the existing polyester filtration media is that the filter cartridges are rather difficult to clean. Although the polyester nonwoven fabric effectively removes contaminants, cleaning of the filter cartridge is difficult and can result in damage to or deterioration of the filter element.

JP 070 54208 discloses a core-sheath type complex binder fiber composed of:

- a core component made up of thermoplastic; and
- a sheath component made up of thermoplastic polymer containing an inorganic antimicrobial agent (particles of silver ion having a diameter of 3 $\mu$m or less [0020]); the melting point of the sheath being more than 30°C lower than that of the core.

This complex binder fiber is intended for use in sanitary processing for stuffing. It is also intended for use for carrrying out heat adhesion on textiles, notably on nonwoven fabrics. However, this document does not relate to any filtration medium.

US 2004/0214495 discloses antimicrobial synthetic fibers for use in antimicrobial filter. These antimicrobial fibers comprise a high tenacity polymer (e.g. PEG) in one component, and hydrolysis resistance polymers (e.g. PCT) in another component. These fibers include an inorganic antimicrobial agent (inorganic silver-containing compound). Accordingly, there exists a need for improved filtration media that overcomes the aforementioned limitations and problems.

BRIEF SUMMARY OF THE INVENTION

The present invention provides a filtration medium that overcomes one or more of the aforementioned limitations. The filtration medium comprises substantially continuous multicomponent filaments arranged to form an open, porous, fluid permeable nonwoven fabric. The filaments include first and second polymer components arranged in substantially constantly positioned distinct zones across the cross section of the filament and extending continuously along the length of the filaments, with the first polymer component being present on at least a portion of the surface of the filament and having a melting temperature less than the melting temperature of the other component and being selected from the group consisting of low density polyethylene, linear low density polyethylene, high density polyethylene, and polylactic acid polymers and copolymers. The first polymer component includes an organic antimicrobial agent incorporated therein. A multiplicity of bond sites are distributed uniformly throughout the fabric, defined by regions where the lower-melting sheath component has softened and flowed together at filament cross-over locations, with the individual filaments being spaced apart from one another except at the filament cross-over locations. The organic antimicrobial agent is blended with the first polymer component prior to extrusion of the filaments so that it is present throughout the first polymer component, preferably at a concentration of from 0.01% to 5% by weight, based on the weight of the first polymer component. It is preferably selected from the group consisting of 2,4,4'-trichloro-2-hydroxy diphenol ether and 5-chloro-2-phenol (2,4 dichlorophenoxy) compounds. The nonwoven fabric filtration medium preferably has a thickness of about 0.2 to 1 mm (10 to 40 mils) and an air permeability of from 150 to 270 cfm/ft$^2$ (1cfm/ft$^2$ = 5,22$\times$10$^{-3}$ m$^3$/s/m)

In one advantageous embodiment of the invention, the nonwoven fabric comprises a spunbond nonwoven fabric formed from substantially continuous bicomponent filaments bonded to one another to form a strong coherent fabric. The spunbond nonwoven fabric may have a basis weight of from 12 to 204 grams per square meter. Preferably, the filaments of the nonwoven fabric are arranged to form an open, porous, and fluid permeable fibrous structure so that a fluid may easily flow through the fabric.

In one preferred embodiment, the filaments are sheath/core bicomponent filaments. The core component comprises polyester or polypropylene and the sheath component comprises polyethylene having a melting temperature less than the melting temperature of the core component and including an organic antimicrobial agent.

In other embodiments, the nonwoven fabric filtration media may be of a multilayer construction. At least one of the layers comprises a nonwoven fabric as described above comprising multicomponent filaments formed from a lower melting temperature first polymer component and a higher melting temperature second polymer component, wherein an organic antimicrobial agent is incorporated in the lower melting first polymer component. This nonwoven fabric layer can be combined with one or more additional nonwoven layers of the same or of different construction.

BRIEF DESCRIPTION OF THE SEVERAL VIEWS OF THE DRAWING(S)

Having thus described the invention in general terms, reference will now be made to the accompanying drawings, which are not necessarily drawn to scale, and wherein:

FIG. 1 is a perspective view of a filter cartridge containing a pleated filter element formed of a filtration medium in accordance with the present invention;

FIG. 2 is a cross-sectional view thereof taken substantially along the line 2-2 of FIG. 1;

FIG. 3 is perspective view of the filtration medium;

FIG. 4 is a scanning electron microscope photograph showing a cross-section of the filtration medium;

FIG. 5 is an illustration of a series of nonwoven fabric samples that have been impregnated with a pigment that is used to determine the relative remaining life of a filter element; and

FIGS. 6 through 8 are graphs that illustrate filtration efficiency as a function of particle size for three nonwoven fabrics that are prepared in accordance with the invention.

DETAILED DESCRIPTION OF THE INVENTION

The present inventions now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

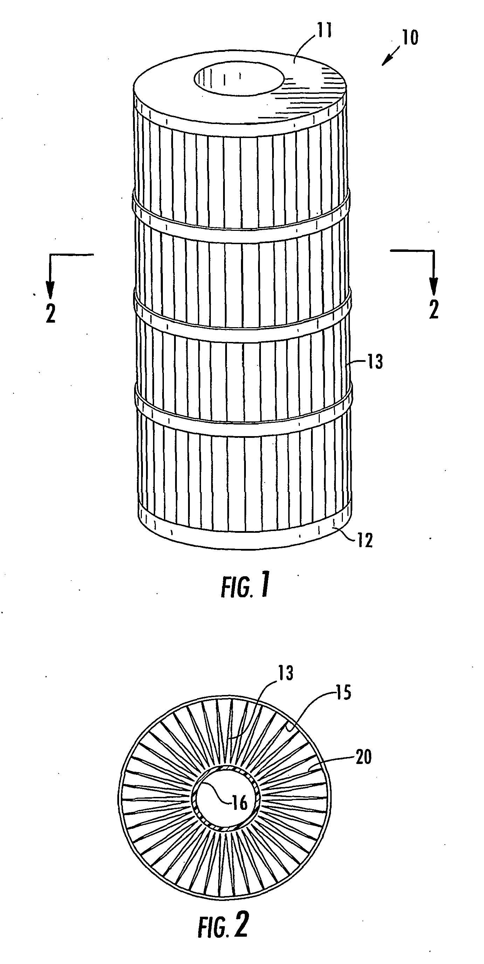

A filter cartridge 10 of the type commonly used spa and pool filters is shown in FIG. 1. The filter cartridge includes end caps 11, 12 and a filter element 13 mounted between the end caps. The filter element 13 is of a generally cylindrical configuration and is of a pleated construction. More particularly, as best seen in FIG. 2, the filter element 13 is formed by a filtration medium 20 which has been pleated along parallel pleat lines or folds 15 that extend parallel to the longitudinal axis of the cylindrical filter element. The pleated filtration medium is positioned surrounding a tubular perforated supporting core 16. The pleated construction of the filter element 13 provides for the exposure of a large surface area of the filtration medium to the flow of water.

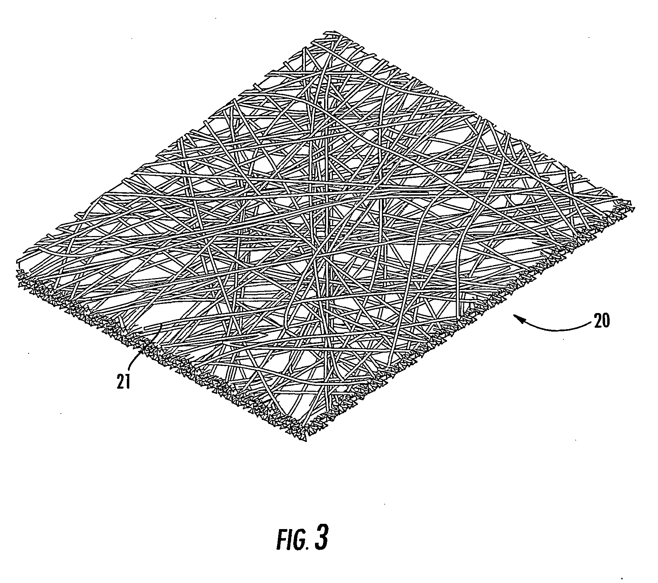

One embodiment of a filtration medium 20 in accordance with the present invention is shown in greater detail in FIG. 3. This filtration medium is readily susceptible to pleating and can be used to form a filter element of the type shown in Figs. 1 and 2. The filtration medium 20 has a thickness, basis weight and stiffness that allows for pleating using commercially available pleating processes and machinery, such as rotary and push-bar type pleaters. More particularly, the filtration medium 20 is capable of being formed into sharp creases or folds without loss of strength, and of maintaining its shape in the creased or pleated condition.

The filtration medium 20 includes at least one nonwoven layer formed of multicomponent continuous filaments. Preferably, the continuous filament nonwoven fabric layer is a spunbond nonwoven fabric. Examples of various types of processes for producing spunbond fabrics are described in U.S. Pat. No. 3,338,992 to Kinney, U.S. Pat. No. 3,802,817 to Matsuki, U.S. Pat. No. 4,405,297 to Appel, U.S. Pat. No. 4,812,112 to Balk, and U.S. Pat. No. 5,665,300 to Brignola et al. In general, these spunbond processes include steps of extruding molten polymer filaments from a spinneret; quenching the filaments with a flow of air to hasten the solidification of the molten polymer; attenuating the filaments by advancing them with a draw tension that can be applied by either pneumatically entraining the filaments in an air stream or by wrapping them around mechanical draw rolls of the type commonly used in the textile fibers industry; depositing the attenuated filaments randomly onto a collection surface, typically a moving belt, to form a web; and bonding the web of loose filaments.

More particularly, the continuous filaments of the nonwoven layer are randomly arranged and bonded to one another to form a strong, porous, water permeable filtration medium having a thickness and stiffness sufficient for being pleated, as described above. The multicomponent filaments have at least two thermoplastic polymer components that are arranged in substantially distinct zones within the filament cross-section. One of the polymer components has a melting temperature that is less than the melting temperature of the other polymer component or components, and this lower-melting polymer component is present on at least a portion of the surface of the filament where it functions to bond the filaments to one another. This polymer component also contains an antimicrobial agent.

The melting temperature of a polymer may be determined with differential scanning calorimetry (DSC). The melting of a polymer generally occurs over a range of temperatures during which time, heat is absorbed by the polymer as the crystalline structure of the bonds is broken and the polymer chains lose their ordered arrangement. DSC may be used to plot the amount of heat introduced into the system as the temperature increases. In the context of the present invention, the melting temperature of the polymer corresponds to the temperature at which the greatest amount of heat has been introduced into the polymer. In a DSC plot, this is generally the highest point on the graph of the melting transition.

Suitable polymers for the lower melting temperature first component include linear low density polyethylene (density 0.95-0.96), low density polyethylene (density 0.92-0.94), and high density polyethylene (density 0.96 and higher). In one advantageous embodiment, the lower melting first component comprises high density polyethylene having a density between and including 0.95 and 0.96 g/cc. Other suitable polymers include polylactic acid (PLA) polymers and copolymers,

Suitable polymers for the higher melting second component include polypropylene, polyesters such as polyethylene terephthalate (PET) or polybutylene terephthalate (PBT), and polyamides such as nylon-6 or nylon 6-6.

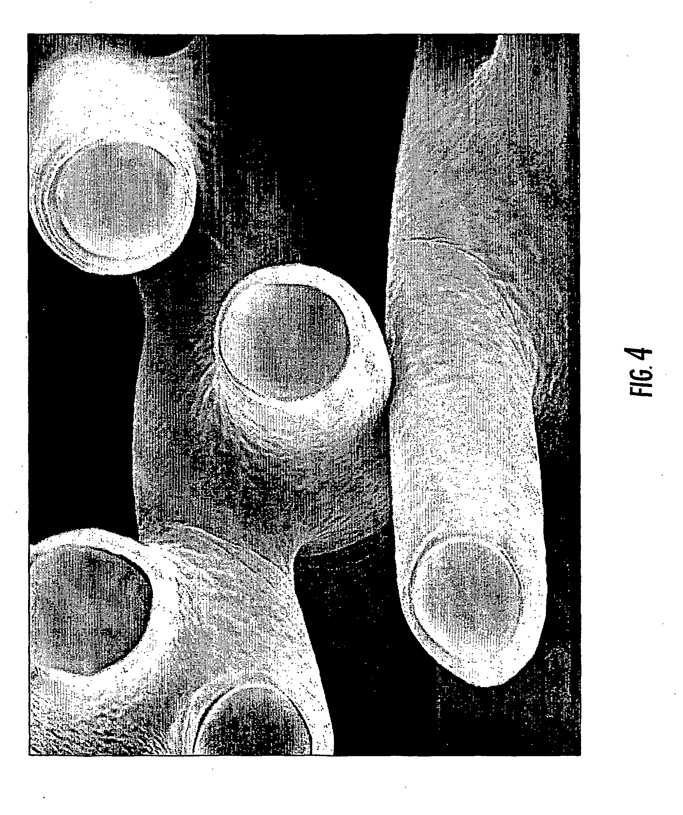

The continuous filaments are bonded to each other at points of contact to impart strength and integrity to the nonwoven layer, but the nonwoven structure remains sufficiently open and porous to provide the requisite air and water permeability. The bonding can be accomplished by various known means, such as by thermal area bonding, calendering, point bonding, ultrasonic bonding and the like. Area bonding and point bonding are two common techniques that may be used to thermally bond the web. Area bonding typically involves passing the web through a heated calender composed of two smooth steel rollers or passing heated steam, heated air or other gas through the web to cause the filaments to become softened and fuse to one another. In a preferred embodiment, the web is area bonded with a heated calender nip comprised of smooth steel rolls. Area bonding advantageously provides enhanced stiffness to the filtration medium due to the presence of bond sites at the filament cross-over locations. During area bonding, the lower melting temperature polymer component softens and flows together at the filament cross-over locations to produce a multiplicity of bond sites distributed uniformly throughout both the lateral extent of the fabric and its thickness. However, the fabric structure remains open and porous, with the individual filaments spaced apart from one another except at the filament cross-over locations. FIG. 4 illustrates the open, porous structure of a nonwoven fabric formed from sheath-core bicomponent filaments and clearly shows the bond sites that are produced at nearly all filament cross-over locations as a result of the polymer sheath component flowing and fusing at the filament cross-over locations. Note that the polymer sheath component flows and bridges the space around contacting filaments, thereby producing strong filament-to-filament bonds that contribute to the enhanced stiffness of the filtration medium.

Point bonding consists of using a heated calender nip to produce numerous discrete bond sites. The point bonding calender nip is comprised of two nip rolls, wherein at least one of the rolls has a surface with a patterned of protrusions. Typically, one of the heated rolls is a patterned roll and the cooperating roll has a smooth surface. As the web moves through the calender roll, the individual filaments are thermally bonded together at discrete locations or bond sites where the filaments contact the protrusions of the patterned roll. Any pattern known in the art may be used, with typical embodiments employing continuous or discontinuous patterns. Preferably the calender rolls are engraved with a pattern that produces point bonds that cover between 6 and 40 percent of the area of the web, more preferably 8 to 30 percent and most preferably 12 to 20 percent. By bonding the web in accordance with these percentage ranges, the filaments are allowed to elongate throughout the full extent of stretching while maintaining the strength and integrity of the fabric.

As used herein, the term "multicomponent" refers to continuous filaments prepared from two or more polymers which are present in discrete structured domains in the filament cross-section, as opposed to blends where the polymer domains tend to be dispersed, random or unstructured. The polymer domains or components are arranged in substantially constantly positioned distinct zones across the cross section of the multicomponent filament and extend continuously along the length of the filaments. A preferred configuration is a sheath/core arrangement, wherein the lower melting temperature first polymer component forms a sheath that substantially surrounds the higher melting temperature second component, the core. Other structured fiber configurations as known in the art may be used, such as side-by-side, segmented pie, islands-in-the-sea, or tipped multi-lobal structures. In these configurations, the lower melting temperature polymer component is present on at least a portion of the filament surface.

The higher melting temperature second polymer component provides the necessary strength, durability and stiffness for the filtration medium and preferably comprises at least 70 percent by weight of the filament, more desirably at least 75 percent by weight of the filament. The lower melting first polymer component serves for bonding together the filaments of the nonwoven layer and to provide controlled release of the antimicrobial agent. The lower melting first polymer component preferably comprises no more than 30 percent by weight, more desirably up to 25 percent of the filament. In some preferred embodiments of the invention, the filaments are sheath-core bicomponent filaments wherein the sheath component comprises 20 percent or less of the filament by weight and the core comprises 80 percent or more of the filament by weight.

In one particularly advantageous embodiment, the filtration medium includes a nonwoven layer of continuous circular cross-section sheath-core filaments with a concentric a sheath of high density polyethylene that surrounds a core of polyethylene terephthalate or polypropylene. Multicomponent filaments comprising a polyethylene sheath component and a polyethylene terephthalate or polypropylene core component may have many desirable characteristics. For example, polyethylene terephthalate has many desirable characteristics including strength, toughness, stiffness, and heat and chemical resistance. Using polyethylene as the first polymer component permits many thermally sensitive melt additives to be incorporated throughout the thickness of the polyethylene during the extrusion process without degradation or loss of desired activity, such as antimicrobial activity. As a result, a nonwoven fabric comprising a thermally sensitive antimicrobial agent may be produced that includes many of the physical properties that are commonly associated with polyethylene terephthalate. In addition, the polyethylene sheath provides a reduced friction release surface from which the collected debris may be more readily removed from the filter medium by rinsing. A further benefit of a first polymer component comprising polyethylene is that it will more readily remove body oils that accumulate in spas and hot tubs since these oils have an affinity to polyethylene. When polypropylene is used as the core component, the filaments can be extruded at a lower temperature than with polyethylene terephthalate, providing processing advantages, while benefiting from the strength, toughness, stiffness and heat resistance of the polypropylene and the protection of the surrounding polyethylene sheath.

As discussed above, an antimicrobial agent is blended with the resin of the first polymer component. Preferably, the antimicrobial agent is present in the first component at a concentration of from 0.01% to 5% by weight, based on the weight of the first polymer component. The specific concentration employed is dictated by the type of antimicrobial agent used and the target organisms, and can be readily determined without undue experimentation using routine screening tests. In one alternative embodiment, the first polymer component may include two or more antimicrobial agents, which may have the same or different functionality.

Various organic antimicrobial and antifungal agents, such as triclosan antimicrobial melt additive available from Microban® can be suitably employed. For example, an antimicrobial agent such as 2,4,4'-trichloro-2'-hydroxydiphenol ether, or 5-chloro-2-phenol (2,4-dichlorophenoxy) compounds commonly sold under the trademark MICROBAN® B by Microban Products Company, Huntersville, North Carolina may be used. The antimicrobial agent is a broad spectrum antimicrobial agent that is effective against the majority of harmful bacteria encountered in water. Some organic antimicrobial agents, including those just mentioned, can be thermally degraded at temperatures that are required to extrude many fiber forming polymers. For instance, many organic melt additives, such as triclosan generally cannot be incorporated into PET fibers because they may volatilize or decompose at the temperatures necessary for the melt extrusion of PET polyester fibers. However, these melt additives may be incorporated into the first polymer component without degradation because the first polymer component may be extruded at temperatures below the degradation temperature of the organic additives. Preferably, the first polymer component has a melting temperature that is less than about 170° C.

The density and composition of the first polymer component may be selected to control the rate at which the antimicrobial agent migrates to the surface of the fibers of the nonwoven fabric. In general, many antimicrobial agents have some degree of mobility in polyolefin polymers. The density and/or composition of the first polymer component may be selected so that the antimicrobial agent diffuses through the polymer at a desired rate. For example, the first polymer component may comprise a blend of polymers, such as polyethylene, polypropylene, polybutylene, and copolymers thereof, wherein the composition of the blend, and proportions of each polymer in the blend, is selected so that the antimicrobial agent diffuses at a desired rate. In addition, the antimicrobial agent typically has little to no affinity for polyesters, such as polyethylene terephthalate. As a result, a nonwoven fabric may be prepared in which the antimicrobial agent diffuses to the surface of each fiber at a desired rate without significant migration of the antimicrobial agent into the core of the fiber. Nonwoven fabrics may thus be prepared wherein the first polymer component serves as a reservoir for controlled diffusion and release of the antimicrobial agent.

The presence of the antimicrobial agent in the first polymer component effectively inhibits the grown of microorganisms on the surface of the filter element during the filtration operation and even after repeated cleanings of the filter cartridge. Because the antimicrobial agent is dispersed throughout the thickness of the first polymer component, it provides antimicrobial activity to the surface of every fiber. The first polymer component serves as a reservoir for sustained diffusion and release of the antimicrobial agent. The nonwoven fabric of the invention may be able to sustain a desired antimicrobial activity for a relatively longer period of time in comparison to a nonwoven fabric that has been dye-treated with an antimicrobial agent.

For spa and pool filter applications, the nonwoven fabric is preferably designed to meet certain desired levels stiffness, thickness, and permeability. For instance, the nonwoven fabric preferably has a thickness, basis weight and stiffness that allows for pleating using commercially available pleating processes and machinery, such as rotary, blade, and push-bar type pleaters. The nonwoven fabric is preferably capable of being formed into sharp creases or folds without loss of strength, and of maintaining its shape in the creased or pleated condition. The basis weight is desirably about 12 to 204 grams per square meter. The filaments typically have a weight per unit length of from about 2 to 6 denier per filament (2.2 to 6.6 dtex per filament).

The stiffness of the filtration medium may be quantified using industry standard test instruments, such as the Handle-O-Meter which measures flexibility (or conversely for the purposes of the present invention, stiffness) of sheet materials such as nonwovens in accordance with ASTM D 2923 or the Association of the Nonwovens Fabrics Industry (INDA) standard test method IST 90.3. Handle-O-Meter measurements are made on an instrument by the Thwing-Albert Instrument Co. of West Berlin, NJ. The measurements are the force in grams to push a 100 mm wide fabric into a slot which is 100 mm wide. In conducting the Handle-O-Meter measurements, the fabric is tested from both the top and the bottom and in both the machine direction and the cross direction and the results are averaged. The filtration medium 20 preferably has a Handle-O-Meter stiffness of at least 35 grams, and more desirably at least 70 grams, and for certain applications more desirably at least 110 grams.

In one advantageous embodiment, the nonwoven fabric has a thickness of from 0.2 to 1 millimeters (10 to 40 mils). The thickness of the nonwoven fabric affects both its filtration characteristics and its pleatability. Too thin a fabric will result in the filtration taking place primarily at the fabric surface. The filter will be easier to clean, but it will clog much more quickly. Thicker materials provide some depth filtration along with surface filtration, which will extend the time required between cleanings. Thickness also affects the pleating and the quality of the final pleat (e.g. pleat shape and sharpness of the pleat), since fabric thickness is directly related to stiffness. Overly thin materials will not have sufficient stiffness to retain a pleat, and the pleats will tend to collapse upon themselves. Overly thick materials are so stiff that they will form poor pleats or will tend to return to the original unpleated configuration. Overly thick materials may also result in fewer pleats for a given area which may result in reducing the number of square feet of surface area in a filter element. This typically does not reduce filter efficiency, but it may result in the filter needing to be cleaned more frequently. Consequently, for pool and spa filtration applications, it is particularly important that the filtration medium have a thickness within the above-noted range.

Fabric thickness may also affect the performance of the fabric as a filtration medium. One important performance characteristic of a filtration medium is turbidity reduction. This measures filtration efficiency in terms of the number of tank or volume turnovers required to reach a desired level of turbidity or water clarity. The NSF/ANSI Standard 50 outlines a turbidity reduction test in Annex B.5. A second performance characteristic of filtration media is plug time. This measures the time interval between required filter cleanings. An effective filter medium must balance these two countervailing characteristics in order to provide filtration efficiency with a reasonable rate of filtering while also providing a suitable time interval between the need to clean or replace the filter. The thickness and permeability of the nonwoven fabric directly affect these properties. For example, a fabric with a relatively high permeability will take longer to remove particulate matter from the water but the interval between cleanings will be greater. Conversely, if the permeability of the fabric is relatively low, filtering efficiency will be high but the time between required cleanings will be too short. However, if permeability is too large, smaller particles may never be captured and the water will be more turbid than desired.

The permeability of the nonwoven fabric may be conveniently evaluated by measuring its air permeability using a commercially available air permeability instrument, such as the Textest air permeability instrument, in accordance with the air permeability test procedures outlined in ASTM test method D-1117. Preferably, the nonwoven fabric should have an air permeability, as measured by this procedure, of from 150 to 270 cfm/ft$^2$ (1 cfm/ft$^2$ = 5,22$\times$10$^{-3}$ m$^3$/s/m).

If additional stiffness is desired for the nonwoven fabric beyond that obtained from the initial nonwoven manufacturing operation, a stiffening coating (not shown) may be applied to one or both surfaces of the nonwoven fabric. More particularly, at least one of the exposed surfaces may be provided with a resin coating for imparting additional stiffness to the nonwoven fabric so that the fabric may be pleated by conventional pleating equipment. By varying the amount of resin coating applied, the air permeability of the nonwoven fabric may also be controlled as required for specific filtration applications. The resin coating may be applied to the nonwoven fabric using conventional coating techniques such as spraying, knife coating, reverse roll coating, or the like. Exemplary resins include acrylic resin, polyesters, nylons or the like. The resin may be supplied in the form of an aqueous or solvent-based high viscosity liquid or paste, applied to the nonwoven fabric, e.g. by knife coating, and then dried by heating.

In other advantageous embodiments, additional stiffness, thickness or other desirable attributes can be obtained by making the nonwoven fabric filtration media of a multilayer construction. At least one of the layers comprises a nonwoven fabric as described above comprising multicomponent filaments formed from a lower melting temperature first polymer component and a higher melting temperature second polymer component, wherein an organic antimicrobial agent is incorporated in the lower melting first polymer component. This nonwoven fabric layer can be combined with one or more additional nonwoven layers of the same or of different construction. For example, a multi-layer composite nonwoven fabric filtration medium can be formed from 2 to 6 layers of nonwoven fabric. The additional nonwoven layer or layers can be prefabricated and the multiple preformed layers can be combined to form an integral unitary filtration medium by bonding under heat and pressure, for example with a calender. Alternatively, the additional layer or layers of can be produced in-line in a continuous operation by extruding the additional layers from one or more additional spin beams. If all of the nonwoven layers are of identical construction and composition, the individual layers will be indistinguishable in the final filtration medium product. However, producing the filtration medium from multiple layers provides flexibility in the manufacturing process and also improves the uniformity of the filtration medium. By combining multiple nonwoven layers of different construction and/or composition, various advantages are realized. For example, one of the layers can incorporate the organic anti-microbial agent triclosan in the polyethylene sheath component of the multicomponent filaments, and another of the layers can be a similar sheath-core bicomponent spunbond nonwoven, but wherein the polyethylene sheath contains a silver anti-microbial agent. In another embodiment, an optional additional nonwoven layer can include sheath-core multicomponent filaments in which a copper antimicrobial agent is present in the polyethylene sheath component. In another embodiment, one or more nonwoven layers of sheath-core multicomponent filaments containing an organic antimicrobial agent in the polyethylene sheath component, can be combined with another nonwoven layer of an entirely different construction, for example a layer of a Reemay® nonwoven fabric formed from polyethylene terephthalate filaments. This construction would provide added tensile properties and strength, with the composite filtration medium exhibiting different properties and appearance on its opposite surfaces.

In some embodiments, stabilizers and antioxidants may also be added to the polymer components. Other additives may also be added in accordance with the present invention. For example inorganic additives such as titanium dioxide, talc, fumed silica or carbon black. The polymer resin may also contain other additives, such as other polymers, diluents, compatibilizers, antiblocking agents, impact modifiers, plasticizers, UV stabilizers, pigments, delusterants, lubricants, wetting agents, antistatic agents, nucleating agents, rheology modifiers, water and alcohol repellents, and the like. It is also anticipated that additive materials which have an affect on processing or product properties, such as extrusion, quenching, drawing, laydown, static and/or electrical properties, bonding, wetting properties or repellency properties may also be used in combination with the polymer components. In particular, polymeric additives may also be used that impart specific benefits to either processing and/or end use.

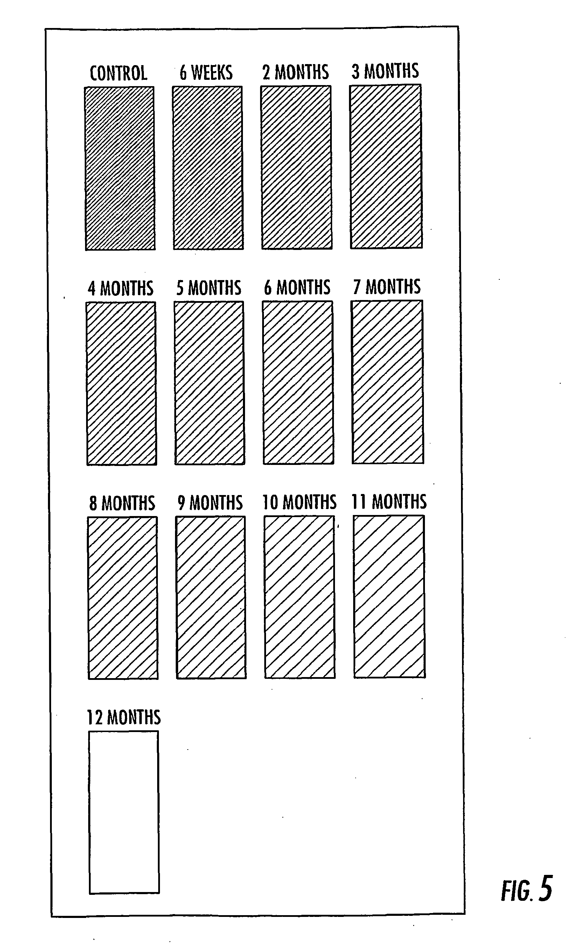

In one alternative embodiment, the filtration medium may also include one or more colorants, such as a pigments and/or dyes, that are incorporated into the nonwoven fabric and that controllably fade in color during the life-span of the filter element. The amount and rate of color loss of the colorant may be used to help determine the remaining life of the filter element and its expiration. In this regard, FIG 5 illustrates a plurality of nonwoven fabric samples depicted at various times during the course of the life of the filter element. The control sample illustrates a filtration medium that has not been exposed to a liquid. The remaining samples depict the change in color in the filtration medium as it filters a liquid over a period of time. In the depicted illustration, the filtration medium has substantially no visible color left after 12 months. This color change may be used to indicate when the filter element should be replaced. It should be recognized that the amount of colorant used may be controlled so that the filtration medium changes color at a desired rate. When a pigment is used as the colorant, it may be blended with the first polymer component prior to fiber extrusion. Alternatively, a pigment or dyestuff may be incorporated into the nonwoven fabric in a subsequent dyeing step.

As discussed above, the colorant fades during use of the filter element. As a result, the filtration medium will produce a change in color that is visible to a user. In one particularly advantageous embodiment, the amount of colorant that is incorporated into the filtration medium may be selectively controlled so that the change in color is correlated with the diffusion of the antimicrobial agent out of the filtration medium. The change in color may be controlled to indicate when the amount of antimicrobial agent in the fabric has decreased below a desired level and the filter element should be replaced. In one alternative embodiment, the filter may be packaged with, or include a reference scale which may be used by a person to determine the remaining life of the filter element. The colorant which is susceptible to fading can be incorporated in the sheath component of the sheath-core core bicomponent filament only, or in both the sheath and core components. In another alternative embodiment, the core component of the sheath-core bicomponent filament can be colored with a non-fading permanent colorant or pigment of one color, for example red, and the sheath component can be colored with a colorant or pigment which is susceptible to fading, for example a blue pigment. Thus, the filter element can be caused to completely change color, e.g. from blue to red, indicating that the filter element should replaced.

The following examples are included to exemplify the invention and should not be considered as limiting the scope of the invention.

TEST METHODS

In the description above and in the examples that follow, the following test methods were employed to determine various reported characteristics and properties. ASTM refers to the American Society for Testing and Materials.

Basis Weight is a measure of the mass per unit area of a fabric or sheet and was determined by ASTM D-3776-96, which is hereby incorporated by reference, and is reported in units of $g/m^2$.

Grab Tensile Strength is a measure of the breaking strength of a fabric or sheet and was conducted according to ASTM D 4632-96, which is hereby incorporated by reference, and is reported in Newtons or pounds. Grab tensile strength is reported in the examples for the machine direction (MD) and for the cross-direction (XD).

Percent Elongation is measured at the point where the sample initially fails and is the elongation at which the load peaks during the grab tensile measurement. Percent elongation is reported in the examples for the machine direction (MD) and for the cross-direction (XD).

FrazierAir Permeability is a measure of air flow passing through a sheet under at a stated pressure differential between the surfaces of the sheet and was conducted according to ASTM D 737, which is hereby incorporated by reference, and is reported in $(m^3/min)/m^2$.

Mullen is a measure of the force required for a blunt object to rupture a fabric or sheet and was determined by ASTM D 1117, which is hereby incorporated by reference, and is reported in $(lbs/in^2)$ ($1\ lbs/in^2 = 703{,}07\ kg/m^2$).

Thickness of the fabric or sheet was determined according to ASTM D 1777-96, which is hereby incorporated by reference, and is reported in mils ($1\ mil = 0.001\ inch = 2{,}54 \times 10^{-5} m$).

Stiffness was measured by the Handle-O-Meter in accordance with ASTM D-2923, which measures the combined effects of substrate flexibility and surface friction. The resistance to push a substrate into a slot is measured and reported in grams. The stiffer the material the greater the resistance.

EXAMPLE 1:

Three different spunbond nonwoven fabrics were prepared in accordance with the invention. The fabric samples comprised substantially continuous bicomponent filaments that were thermally bonded to one another. The bicomponent filaments had a sheath/core configuration wherein the weight ratio of the sheath component to the core component was about 30:70. The sheath comprised a high density polyethylene resin, which is available from Dow Plastics. The high density polyethylene resin had a density of 0.95 g/cm$^3$ and a melt index of 17 g/10 min. The core is comprised of polyethylene terephthalate, which is available from DuPont The polyethylene terephthalate can have a density of 1.3 to 1.4 g/cm$^3$ and an intrinsic viscosity of 0.58 to 0.72 Dl./g. Samples 1 and 2 included an antimicrobial agent in the sheath in an amount from about 0.3 wt. %, based on the weight of the first polymer component. The antimicrobial agent is triclosan, which is available from Microban® under the product number CMPDTR 175-1.

The samples were prepared by extruding the two polymer components through separate extruders. The polyethylene component was melt extruded at a temperature of about 160° C and the polyethylene terephthalate component was melt extruded at a temperature of about 280° C. The two separate polymer components were then introduced into a spinneret that is configured to combine the polymer components to produce sheath/core bicomponent fibers. The two polymer components were combined in the spinneret to form the bicomponent fibers. The bicomponent fibers were then quenched, drawn, and deposited as a fibrous web onto a moving belt. Two of the samples, Samples 1 and 2, were area bonded by passing the moving web through a heated calender nip comprised of two smooth steel rolls having a temperature of 200° C. The filaments of Sample 3 were thermally bonded together by passing the moving web through a heated patterned calender nip to produce a point bonded nonwoven fabric having about 20% of its area bonded together. The resulting samples have the properties described in Table 1. The results show that for a comparable basis weight, the product of the present invention (Sample 1) is stronger than Control 1 in Mullen and Grab tensile strength and it is stiffer.

Table 1

| Product | Basis Weight (osy) | Air Permeability (cfm$^2$) | Thickness (mils) | Mullen (lbs) | MD Grab (%) | XD Grab (lbs) | Stiffness (grams) |
|---|---|---|---|---|---|---|---|
| Sample 1 | 3.0 | 216 | 22 | 80 | 134 | 95 | 133 |
| Sample 2 | 4.0 | 191 | 28 | 145 | 145 | 123 | 211 |
| Sample 3 | 3.3 | 110 | 17.6 | 134 | 134 | 78 | 55 |
| Control 1* | 2.95 | 256 | 16.5 | 50 | 86 | 79 | 107 |

*Control 1 comprised a polyester spunbond nonwoven having polyethylene terephthalate filaments thermally bonded to polyester copolymer filaments (Reemay® 2033).

EXAMPLE 2

The filtration efficiency as a function of particle diameter for Samples 1-3 were compared to the control sample (Control 1). Efficiency was measured by passing a liquid medium having latex particles through the samples at a flow rate of 1 Umin. The liquid medium contained 5,000 particles per mL. The filtration efficiencies of the samples are calculated with the following equation:

$$ F_{eff} = \frac{C_{up} - C_{down}}{C_{up}} \; x \, 100 \, \% $$

wherein:

$F_{eff}$ = Efficiency;
$C_{up}$ = Particle Concentration Upstream of Filter; and
$C_{down}$ = Particle Concentration Downstream of Filter.

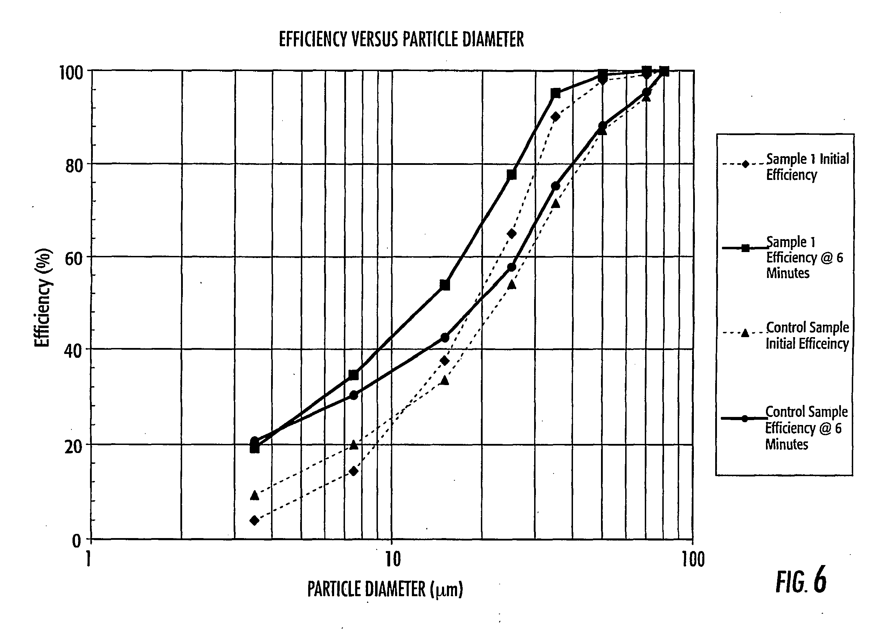

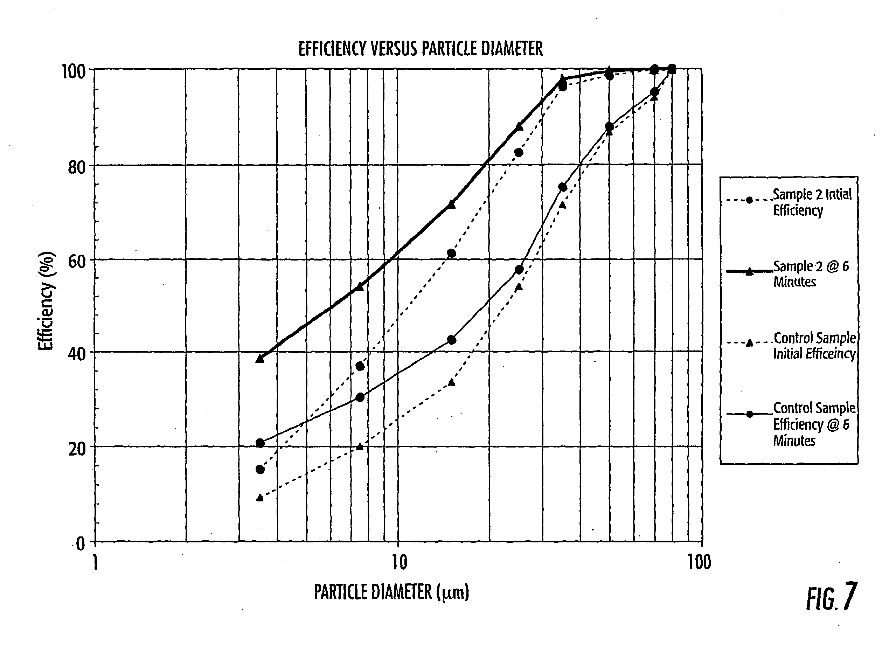

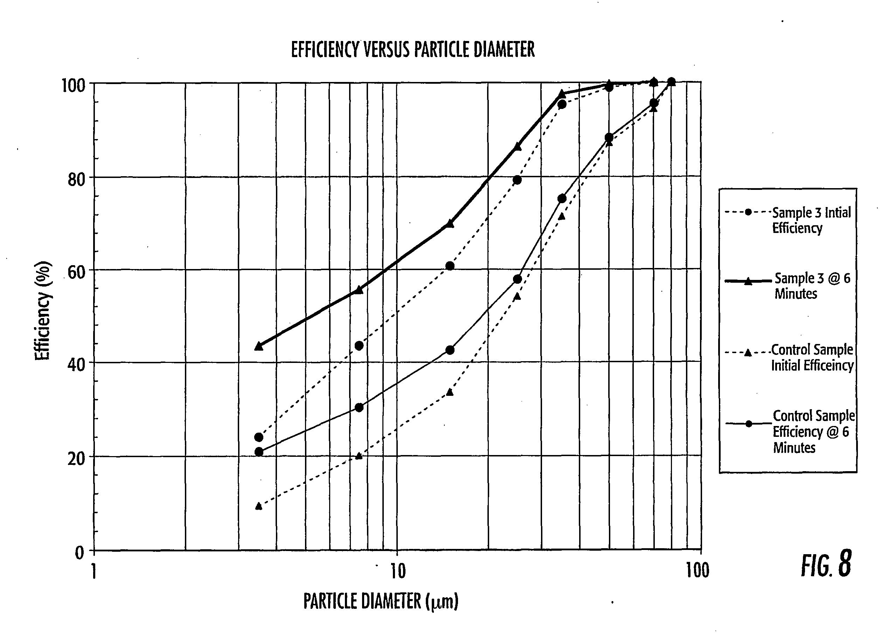

The comparative results are shown graphically in FIGS. 6 through 8. The graphs show that the filtration medium of the invention (Samples 1-3) exhibit excellent filtration efficiencies and generally have better initial filtration in comparison to the control sample.

EXAMPLE 3

A spunbond nonwoven fabric with a basis weight of 34 grams per square meter (gsm) is formed from round cross-section sheath-core continuous bicomponent filaments. The sheath comprises a high density polyethylene resin (density of 0.95 g/cm$^3$ and a melt index of 17 g/10 min) containing about 0.3 wt. % of the antimicrobial agent is triclosan, which is available from Microban®. The core component comprises polyethylene terephthalate. The filaments have a ratio of sheath to core by weight of 20/80. The fabric is prepared by extruding the two polymer components through separate extruders as in Example 1, followed by area bonding the nonwoven web in a through-air bonder.

Three layers of this fabric are combined and directed through a heated calender nip comprised of two smooth steel rolls having a temperature of 200° C. The resulting composite nonwoven fabric filtration medium has an overall basis weight of 102 gsm and a stiffness that allows it to be pleated to form crisp, shape-sustaining pleats.

EXAMPLE 4

Two layers of the fabric of Example 3 are combined with one layer of a 34 gsm spunbond polyester nonwoven fabric produced by BBA Fiberweb under the trademark Reemay® and the combined layers are bonded together by passing through a heated calender nip as in Example 3. The Reemay nonwoven fabric consists of an area bonded web of polyethylene terephthalate matrix filaments bonded together by binder filaments of a lower melting polyethylene isophthalate copolymer. The resulting composite nonwoven filtration medium exhibits excellent tensile strength and stiffness properties, with a low-friction release surface on the polyethylene-containing side of the composite and with the opposite side presenting a surface appearance similar to that of a Reemay® nonwoven fabric.

EXAMPLE 5

A fabric similar to that of Example 3 is produced except that the polyethylene sheath component contains 0.3 wt. % of a silver antimicrobial agent (Microban® Silver). Another fabric similar to that of Example 3 is produced except that the polyethylene sheath component contains 0.3 wt. % of a copper oxide antifungal agent such as Cupron™ supplied by Cupron, Inc.. These two fabrics and a layer of the fabric of Example 3 are combined and bonded together by passing through a heated calender nip as in Example 3. The resulting composite nonwoven filtration medium exhibits broad spectrum antimicrobial properties combined with effective antifungal properties.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A nonwoven filtration medium (20) comprising substantially continuous multicomponent filaments arranged to form an open, porous, fluid permeable nonwoven fabric, the filaments comprising first and second polymer components arranged in substantially constantly positioned distinct zones across the cross section of the filament and extending continuously along the length of the filaments, the first polymer component being present on at least a portion of the surface of the filament and having a melting temperature less than the melting temperature of the second polymer component, **characterized in that** the first polymer component is selected from the group consisting of low density polyethylene, linear low density polyethylene, high density polyethylene, and polylactic acid polymers and copolymers, and said first polymer component includes an organic antimicrobial agent incorporated therein, and a multiplicity of bond sites are distributed uniformly throughout the fabric and defined by regions where the lower-melting first polymer component has softened and flowed together at filament cross-over locations, with the individual filaments being spaced apart from one another except at the filament cross-over locations.

2. The nonwoven fabric filtration medium of claim 1, having a thickness of about 0.2 to 1 mm.

3. The nonwoven fabric filtration medium of claim 1 or 2, having an air permeability of from 150 to 270 cfm/f$^2$ (1cfm/ft$^2$ = $5,22 \times 10^{-3} m^3/s/m^2$)

4. The nonwoven fabric filtration medium of any one of claims 1 to 3, which has a basis weight of about 12 to 204 grams per square meter.

5. The nonwoven fabric filtration medium of any one of claims 1 to 4, which has a Handle-O-Vleter stiffness of at least 35 grams.

6. The nonwoven fabric filtration medium of any one of claims 1 to 5, wherein the antimicrobial agent is present in the first polymer component at a concentration of from 0.01% to 5% by weight, based on the weight of the first polymer component.

7. The nonwoven fabric filtration medium of claim any one of the previous claims, wherein the antimicrobial agent is selected from the group consisting of 2,4,4'-trichloro-2-hydroxy diphenol ether and 5-chloro-2-phenol (2,4 dichlorophenoxy) compounds.

8. The nonwoven fabric filtration medium of claim any one of the previous claims, wherein the first polymer component comprises polyethylene and tie second polymer component comprises polyester or polypropylene.

9. The nonwoven fabric filtration medium of any one of the previous claims, wherein the multicomponent fibers comprise sheath/core bicomponent filaments with the lower-melting temperature first polymer component being located in the sheath.

10. The nonwoven fabric filtration medium of claim 9, wherein the first polymer component comprises polyethylene and the second polymer component comprises polyester or polypropylene.

11. The nonwoven filtration medium of claim 9 or 10, wherein the sheath is present in an amount up to 30% by weight of the filaments.

12. The nonwoven filtration medium of any one of claims 9 to 11, wherein sheath polymer component includes a colorant which is susceptible to fading and which imparts a predetermined initial color to the filtration medium, but which fades away after extended exposure to liquid so that the loss of said color serves as a visual indicator that the filtration medium requires replacement.

13. The nonwoven filtration medium of claim 12, wherein the core polymer component includes a colorant of a contrasting different color from that in the sheath so that upon fading of the colorant in the sheath, the filtration medium changes to the color of the colorant in the core.

14. A composite nonwoven filtration medium comprising a first layer of the fluid permeable nonwoven fabric of any one of the previous claims and at least one additional open, porous, fluid permeable nonwoven fabric.

**15.** The composite nonwoven filtration medium of claim 14, wherein the at least one additional open, porous fluid permeable nonwoven fabric is of identical construction and composition to said first layer.

**16.** The composite nonwoven filtration medium of claim 14, wherein the at least one additional open, porous fluid permeable nonwoven fabric comprises substantially continuous multicomponent filaments formed of first and second polymer components, with said first polymer component including an inorganic antimicrobial agent.

**17.** The composite nonwoven filtration medium of claim 14, wherein the at least one additional open, porous fluid permeable nonwoven fabric comprises a spunbond nonwoven fabric formed from polyethylene terephthalate matrix filaments and polyethylene isophthalate copolymer binder filaments.

**18.** The nonwoven filtration medium of any one of claims 1 to 17, wherein the filtration medium is pleated.

**19.** A filter element (13) for pools or spas comprising the nonwoven filtration medium of claim 18 which has a generally cylindrical configuration about a central axis and wherein the pleats extend parallel to the axis.

**20.** A filter cartridge (10) for pool and spa filtration comprising a tubular supporting core (16), the filter element of claim 19 positioned surrounding said tubular supporting core, and end caps (11, 12) at opposite ends of the filter cartridge.

**Patentansprüche**

**1.** Vliesfiltrationsmedium (20), das im Wesentlichen kontinuierliche Mehrkomponentenfilamente, die so angeordnet sind, dass sie ein offenes, poröses, flüssigkeitsdurchlässiges Vliesgewebe bilden, umfasst, wobei die Filamente erste und zweite Polymerkomponenten, die in im Wesentlichen konstant positionierten abgegrenzten Zonen durch den Querschnitt des Filaments angeordnet sind und sich kontinuierlich über die Länge des Filaments erstrecken, umfassen, wobei die erste Polymerkomponente auf mindestens einem Teil der Oberfläche des Filaments vorliegt und eine Schmelztemperatur hat, die niedriger ist als die Schmelztemperatur der zweiten Polymerkomponente, **dadurch gekennzeichnet, dass** die erste Polymerkomponente ausgewählt ist aus der Gruppe, bestehend aus Polyethylen niedriger Dichte, linearem Polyethylen niedriger Dichte, Polyethylen hoher Dichte und Polymilchsäurepolymeren und -copolymeren, und die genannte erste Polymerkomponente ein organisches antimikrobielles Mittel, das darin enthalten ist, umfasst und eine Vielzahl an Bindungsstellen einheitlich durch das Gewebe hindurch verteilt sind und durch Bereiche, wo die bei niedrigerer Temperatur schmelzende erste Polymerkomponente weich geworden ist und an Kreuzungspunkten des Filaments zusammengeflossen ist, definiert sind, wobei die individuellen Filamente räumlich voneinander getrennt sind, außer an den Kreuzungsstellen der Filamente.

**2.** Vliesgewebefiltrationsmedium gemäß Anspruch 1, das eine Dicke von etwa 0,2 bis 1 mm hat.

**3.** Vliesgewebefiltrationsmedium gemäß Anspruch 1 oder 2, das eine Luftdurchlässigkeit von 150 bis 270 cfm/ft$^2$ (1 cfm/ft$^2$ = 5,22 x 10$^{-3}$ m$^3$/s/m$^2$) hat.

**4.** Vliesgewebefiltrationsmedium gemäß einem der Ansprüche 1 bis 3, das ein Flächengewicht von etwa 12 bis 204 Gramm pro Quadratmeter hat.

**5.** Vliesgewebefiltrationsmedium gemäß einem der Ansprüche 1 bis 4, das eine Handle-O-Meter-Steifigkeit von mindestens 35 Gramm hat.

**6.** Vliesgewebefiltrationsmedium gemäß einem der Ansprüche 1 bis 5, wobei das antimikrobielle Mittel in der ersten Polymerkomponente bei einer Konzentration von 0,01 Gewichtsprozent bis 5 Gewichtsprozent, basierend auf dem Gewicht der ersten Polymerkomponente, vorliegt.

**7.** Vliesgewebefiltrationsmedium gemäß einem der vorangehenden Ansprüche, wobei das antimikrobielle Mittel ausgewählt ist aus der Gruppe, bestehend aus 2,4,4'-Trichlor-2-hydroxydiphenolether- und 5-Chlor-2-phenol(2,4-dichlorphenoxy)-Verbindungen.

**8.** Vliesgewebefiltrationsmedium gemäß einem der vorangehenden Ansprüche, wobei die erste Polymerkomponente Polyethylen umfasst und die zweite Polymerkomponente Polyester oder Polypropylen umfasst.

9. Vliesgewebefiltrationsmedium gemäß einem der vorangehenden Ansprüche, wobei die Mehrkomponentenfasern Hülle/Kern-Bikomponentenfilamente umfassen, wobei sich die erste Polymerkomponente, die eine niedrigere Schmelztemperatur hat, in der Hülle befindet.

10. Vliesgewebefiltrationsmedium gemäß Anspruch 9, wobei die erste Polymerkomponente Polyethylen umfasst und die zweite Polymerkomponente Polyester oder Polypropylen umfasst.

11. Vliesfiltrationsmedium gemäß Anspruch 9 oder 10, wobei die Hülle in einer Menge bis zu 30 Gewichtsprozent des Filaments vorliegt.

12. Vliesfiltrationsmedium gemäß einem der Ansprüche 9 bis 11, wobei die Hüllenpolymerkomponente ein Färbemittel, das anfällig für Verblassen ist, und das dem Filtrationsmedium eine vorbestimmte Ausgangsfarbe verleiht, aber nach verlängerter Aussetzung an eine Flüssigkeit verblasst, so dass der Verlust der genannten Farbe als ein visueller Indikator dafür dient, dass das Filtrationsmedium ausgetauscht werden muss, umfasst.

13. Vliesfiltrationsmedium gemäß Anspruch 12, wobei die Kernpolymerkomponente ein Färbemittel einer entgegengesetzt unterschiedlichen Farbe zu der in der Hülle umfasst, so dass bei dem Verblassen des Färbemittels in der Hülle das Filtrationsmedium zu der Farbe des Färbemittels im Kern wechselt.

14. Komposit-Vliesfiltrationsmedium, das eine erste Schicht des flüssigkeitsdurchlässigen Vliesgewebes gemäß einem der vorangehenden Ansprüche und mindestens ein zusätzliches offenes, poröses, flüssigkeitsdurchlässiges Vliesgewebe umfasst.

15. Komposit-Vliesfiltrationsmedium gemäß Anspruch 14, wobei das mindestens eine zusätzliche offene, poröse, flüssigkeitsdurchlässige Vliesgewebe eine/n identische/n Aufbau und Zusammensetzung wie die genannte erste Schicht hat.

16. Komposit-Vliesfiltrationsmedium gemäß Anspruch 14, wobei das mindestens eine zusätzliche offene, poröse, flüssigkeitsdurchlässige Vliesgewebe im Wesentlichen kontinuierliche Mehrkomponentenfilamente, die aus ersten und zweiten Polymerkomponenten gebildet sind, umfasst, wobei die genannte erste Polymerkomponente ein anorganisches antimikrobielles Mittel umfasst.

17. Komposit-Vliesfiltrationsmedium gemäß Anspruch 14, wobei das mindestens eine zusätzliche offene, poröse, flüssigkeitsdurchlässige Vliesgewebe ein Spunbond-Vliesgewebe, das aus Polyethylenterephthalat-Matrixfilamenten und Polyethylenisophthalatcopolymer-Bindefilamenten gebildet ist, umfasst.

18. Vliesfiltrationsmedium gemäß einem der Ansprüche 1 bis 17, wobei das Filtrationsmedium plissiert ist.

19. Filterelement (13) für Schwimmbäder oder Spas, das das Vliesfiltrationsmedium gemäß Anspruch 18, das eine im Wesentlichen zylindrische Struktur um eine Zentralachse hat und wobei sich die Falten parallel zu der Achse erstrecken, umfasst.

20. Filterkartusche (10) für Schwimmbad- und Spafiltration, das einen röhrenförmigen Stützkern (18), wobei das Filterelement gemäß Anspruch 19 so angeordnet ist, dass es den genannten röhrenförmigen Stützkern umgibt, und Endkappen (11, 12) an entgegengesetzten Seiten der Filterkartusche umfasst.

**Revendications**

1. Milieu de filtration non tissé (20) comprenant des filaments multi-composants sensiblement continus agencés pour former une étoffe non-tissée poreuse, ouverte, perméable aux fluides, les filaments comprenant des premier et second composants polymères agencés dans des zones distinctes positionnées de façon sensiblement constante à travers la section du filament et s'étendant de façon continue sur la longueur des filaments, le premier composant polymère étant présent sur au moins une portion de la surface du filament et ayant une température de fusion inférieure à la température de fusion du second composant polymère, **caractérisé en ce que** le premier composant polymère est choisi dans le groupe consistant en le polyéthylène basse densité, le polyéthylène basse densité linéaire, le polyéthylène haute densité, et les polymères et copolymères d'acide polylactique, et ledit premier composant polymère comporte un agent antimicrobien organique incorporé à l'intérieur, et une multiplicité de sites de liaison sont distribués de façon uniforme dans toute l'étoffe et définis par des régions où le premier composant polymère ayant un point de fusion plus bas s'est ramolli et a coulé ensemble au niveau d'emplacements de croisement de filaments, les filaments individuels étant espacés les uns des autres sauf au niveau des emplacements de croisement de filaments.

**2.** Milieu de filtration d'étoffe non-tissée selon la revendication 1, ayant une épaisseur d'environ 0,2 à 1 mm.

**3.** Milieu de filtration d'étoffe, non-tissée selon la revendication 1 ou 2, ayant une perméabilité à l'air d'environ 150 à 270 cfm/ft$^2$ (1 cfm/ft$^2$ = 5,22 x 10$^{-3}$ m$^3$/s/m$^2$).

**4.** Milieu de filtration d'étoffe non-tissée selon l'une quelconque des revendications 1 à 3, qui a une masse surfacique d'environ 12 à 204 grammes par mètre carré.

**5.** Milieu de filtration d'étoffe non-tissée selon l'une quelconque des revendications 1 à 4, qui a une rigidité Handle-O-Meter d'au moins 35 grammes.

**6.** Milieu de filtration d'étoffe non-tissée selon l'une quelconque des revendications 1 à 5, dans lequel l'agent antimicrobien est présent dans le premier composant polymère à une concentration de 0,01 % à 5 % en poids, sur la base du poids du premier composant polymère.

**7.** Milieu de filtration d'étoffe non-tissée selon l'une quelconque des revendications précédentes, dans lequel l'agent antimicrobien est choisi dans le groupe consistant en les composés 2,4,4'-trichloro-2-hydroxy diphénol éther et 5-chloro-2-phénol (2,4 dichlorophénoxy).

**8.** Milieu de filtration d'étoffe non-tissée selon l'une quelconque des revendications précédentes, dans lequel le premier composant polymère comprend du polyéthylène et le second composant polymère comprend le polyester ou le polypropylène.

**9.** Milieu de filtration d'étoffe non-tissée selon l'une quelconque des revendications précédentes, dans lequel les fibres multi-composants comprennent les filaments bi-composants gaine/âme, le premier composant polymère de température de fusion plus basse étant située dans la gaine.

**10.** Milieu de filtration d'étoffe non-tissée selon la revendication 9, dans lequel le premier composant polymère comprend du polyéthylène et le second composant polymère comprend le polyester ou le polypropylène.

**11.** Milieu de filtration non-tissé selon la revendication 9 ou 10, dans lequel la gaine est présente dans une quantité allant jusqu'à 30 % en poids des filaments.

**12.** Milieu de filtration non-tissé selon l'une quelconque des revendications 9 à 11, dans lequel le composant polymère de gaine comporte un colorant qui est susceptible de se décolorer et qui confère une couleur initiale prédéterminée au milieu de filtration, mais qui se décolore après une exposition prolongée à un liquide de sorte que la perte de ladite couleur sert d'indicateur visuel selon lequel le milieu de filtration doit être remplacé.

**13.** Milieu de filtration non-tissé selon la revendication 12, dans lequel le composant polymère d'âme comporte un colorant d'une couleur différente contrastant par rapport à celle de la gaine de sorte que lors de la décoloration du colorant dans la gaine, le milieu de filtration passe à la couleur du colorant dans l'âme.

**14.** Milieu de filtration non tissé composite comprenant une première couche de l'étoffe non-tissée perméable aux fluides selon l'une quelconque des revendications précédentes et au moins une étoffe non-tissée poreuse, ouverte, perméable aux fluides supplémentaire.

**15.** Milieu de filtration non-tissé composite selon la revendication 14, dans lequel l'au moins une étoffe non-tissée poreuse, ouverte, perméable aux fluides supplémentaire est de construction et de composition identiques à ladite première couche.

**16.** Milieu de filtration non-tissé composite selon la revendication 14, dans lequel l'au moins une étoffe non-tissée poreuse, ouverte, perméable aux fluides supplémentaire comprend des filaments multi-composants sensiblement continus formés de premier et second composants polymères, ledit premier composant polymère comportant un agent antimicrobien inorganique.

17. Milieu de filtration non-tissé composite selon la revendication 14, dans lequel l'au moins une étoffe non-tissée poreuse, ouverte, perméable aux fluides supplémentaire comprend une étoffe non-tissée filée-liée formée de filaments de matrice de polyéthylène térephtalate et de filaments de liants de copolymère de polyéthylène isophtalate.

18. Milieu de filtration non-tissé selon l'une quelconque des revendications 1 à 17, dans lequel le milieu de filtration est plissé.

19. Elément de filtre (13) pour les piscines ou les spas comprenant le milieu de filtration non-tissé selon la revendication 18, ayant une configuration généralement cylindrique autour d'un axe central et dans lequel les plis s'étendent parallèlement à l'axe.

20. Cartouche de filtre (10) pour la filtration de piscines et de spas comprenant une âme de support tubulaire (16), l'élément de filtre selon la revendication 19 positionné entourant ladite âme de support tubulaire, et des bouchons d'extrémité (11, 12) au niveau d'extrémités opposées de la cartouche de filtre.

FIG. 1

FIG. 2

*FIG. 3*

FIG. 4

FIG. 5

EFFICIENCY VERSUS PARTICLE DIAMETER

FIG. 6

EP 1 917 090 B1

EFFICIENCY VERSUS PARTICLE DIAMETER

FIG. 7

Legend:
- Sample 2 Intial Efficiency
- Sample 2 @ 6 Minutes
- Control Sample Initial Efficeincy
- Control Sample Efficiency @ 6 Minutes

Y-axis: Efficiency (%)
X-axis: PARTICLE DIAMETER (μm)

EP 1 917 090 B1

# EFFICIENCY VERSUS PARTICLE DIAMETER

FIG. 8

EP 1 917 090 B1

# EP 1 917 090 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 07054208 B
- US 20040214495 A
- US 3338992 A, Kinney
- US 3802817 A, Matsuki
- US 4405297 A, Appel
- US 4812112 A, Balk
- US 5665300 A, Brignola